# EUROPEAN PATENT APPLICATION

(11) **EP 4 611 006 A1**
(43) Date of publication of application: **03.09.2025**
(21) Application number: 23882724.0
(22) Date of filing: 26.10.2023
(51) Int. Cl.: H01B 7/02, H01B 3/00, H01B 3/30, H01B 3/40, H01B 3/42, H01B 7/00, H01F 5/00, H01F 5/06, H02K 3/34

(54) **LAYERED BODY OF CONDUCTOR AND INSULATIVE COATING, COIL, ROTATING ELECTRICAL MACHINE, INSULATING RESIN COMPOSITION, INSULATING COATING MATERIAL, AND INSULATING FILM**

(30) Priority: 27.10.2022 JP 2022172584
(71) Applicant: Sumitomo Seika Chemicals Co., Ltd., Kako-gun, Hyogo 675-0145 (JP)
(72) Inventor: HAYASHIZAKA, Noriyuki, Kako-gun, Hyogo 675-0145 (JP); KATO, Toshihiko, Kako-gun, Hyogo 675-0145 (JP)
(74) Representative: Mewburn Ellis LLP
(86) International application number: PCT/JP2023/038717
(87) International publication number: WO 2024/090522

(57) **Abstract**

There is provided a laminate having excellent partial discharge resistance even in a high-humidity environment and also having excellent insulating properties. A laminate comprising at least a conductor and an insulating coating, wherein the insulating coating is composed of a nanocomposite formed of a resin composition in which a metal oxide hydrate is dispersed in a resin, and wherein the metal oxide hydrate has a negative zeta potential when dispersed in N-methyl-2-pyrrolidone (NMP).

## Description

### Technical Field

In one aspect, the present invention relates to a laminate of a conductor and an insulating coating, a coil, a rotating electric machine, an insulating resin composition, an insulating paint, and an insulating film.

### Background Art

Insulated electric wires for use in electrical apparatuses such as motors include insulated electric wires in which an insulating layer is formed by applying to a conductor surface an insulating paint obtained by dissolving a resin such as a polyimide or polyamide-imide or a resin precursor thereof in an organic solvent, followed by baking; and insulated electric wires in which an insulating layer is formed by winding an insulating film such as a polyimide film or mica tape around a conductor (so-called tape wrapping).

In electrical apparatuses with a high operating voltage, such as motors used at a high voltage, high voltage is applied to the insulated electric wires constituting coils. If microvoids are present between adjacent insulated electric wires or in the insulating coating, concentration of electric field may occur at that region, resulting in partial discharge. The partial discharge may cause deterioration of the insulating coating, which may cause premature dielectric breakdown of the coil, leading to a failure of the electrical apparatus.

Furthermore, in recent years, even in apparatuses categorized as the low-voltage-driven type of systems in which motors or the like are driven by inverters used for energy conservation and variable speed, there has been an increasing number of cases where abrupt overvoltages (so-called inverter surges) occur in the drive voltage repeatedly in an extremely short period, leading to dielectric breakdown. The dielectric breakdown is due to partial discharge caused by the overvoltages that occur repeatedly due to the inverter surges.

As a method for improving the resistance to partial discharge (partial discharge resistance), a laminate comprising an insulating coating, which is formed of a resin composition containing a nano-size metal oxide hydrate such as boehmite, has been disclosed (for example, see Patent Literature 1).

### Citation List

### Patent Literature

Patent Literature 1: JP 6567797 B

### Summary of Invention

### Technical Problem

Many motors are used in harsh environments, for example, in a high-humidity environment. Typically, in a high-humidity environment, the partial discharge starting voltage decreases, and partial discharge is more likely to occur. Thus, it is required that the performance is maintained even in a high-humidity environment. Moreover, typically, when an insulating layer absorbs moisture, the dielectric breakdown voltage also decreases. Furthermore, the flexibility also decreases when the insulating layer is mixed with an inorganic substance, such as a metal oxide hydrate, to improve the partial discharge resistance.

In one aspect, it is an object of the present invention to provide a laminate having excellent partial discharge resistance even in a high-humidity environment and also having excellent insulating properties. It is another object of the present invention to provide a coil and a rotating electric machine having excellent partial discharge resistance even in a high-humidity environment and also having excellent insulating properties, and further provide an insulating resin composition, an insulating paint, and an insulating film for forming the laminate.

### Solution to Problem

The present inventor has conducted extensive research to solve the aforementioned problem. As a result, the present inventor has unexpectedly found that a laminate comprising at least a conductor and an insulating coating, wherein the insulating coating is composed of a nanocomposite formed of a resin composition in which a metal oxide hydrate is dispersed in a resin, and wherein a metal oxide hydrate that has a negative zeta potential when dispersed in N-methyl-2-pyrrolidone (NMP) is used as the metal oxide hydrate, exhibits excellent partial discharge resistance in a high-humidity environment and also exhibits excellent insulating properties. The present inventor has conducted further research based on this finding, thereby completing the present invention.

In one aspect, the present invention provides a laminate, a coil, a rotating electric machine, an insulating resin composition, an insulating paint, and an insulating film, as set forth below.

Item 1. A laminate comprising at least a conductor and an insulating coating,
wherein the insulating coating is composed of a nanocomposite formed of a resin composition in which a metal oxide hydrate is dispersed in a resin, and
wherein the metal oxide hydrate has a negative zeta potential when dispersed in N-methyl-2-pyrrolidone (NMP).

Item 2. The laminate according to item 1, wherein the metal oxide hydrate comprises a hydrated alumina.

Item 3. The laminate according to item 1 or 2, wherein the nanocomposite contains the metal oxide hydrate dispersed in a sol state.

Item 4. The laminate according to any one of items 1 to 3, wherein the resin contained in the nanocomposite is at least one selected from the group consisting of a formal resin, a polyurethane, an epoxy resin, a polyester, a polyester-imide, a polyetherimide, a polyamide-imide, a polyimide, and precursors thereof.

Item 5. The laminate according to any one of items 1 to 4, wherein the resin contained in the nanocomposite is at least one selected from the group consisting of a polyimide and a polyimide precursor.

Item 6. The laminate according to any one of items 1 to 5, wherein the laminate is in the form of an insulated electric wire.

Item 7. A coil comprising the laminate according to item 6.

Item 8. A rotating electric machine comprising the laminate according to item 6.

Item 9. An insulating resin composition for forming the insulating coating of the laminate according to any one of items 1 to 5.

Item 10. An insulating paint for forming the insulating coating of the laminate according to any one of items 1 to 5.

Item 11. An insulating film formed using the nanocomposite according to any one of items 1 to 5.

### Advantageous Effects of Invention

According to one aspect of the present invention, it is possible to provide a laminate comprising at least a conductor and an insulating coating, the laminate having excellent partial discharge resistance even in a high-humidity environment and also having excellent insulating properties. Moreover, according to one aspect of the present invention, it is possible to provide a coil and a rotating electric machine having excellent partial discharge resistance even in a high-humidity environment and also having excellent insulating properties, and further provide an insulating resin composition, an insulating paint, and an insulating film for forming the laminate.

### Brief Description of Drawings

FIG. 1 is a schematic cross-sectional view showing one example of a laminate according to an embodiment of the present invention.
FIG. 2 is a schematic cross-sectional view showing one example of an insulated electric wire according to an embodiment of the present invention.
FIG. 3 is a schematic cross-sectional view showing another example of an insulated electric wire according to an embodiment of the present invention.
FIG. 4 is a schematic cross-sectional view showing another example of an insulated electric wire according to an embodiment of the present invention.
FIG. 5 is a schematic cross-sectional view showing another example of an insulated electric wire according to an embodiment of the present invention.

### Description of Embodiments

Some embodiments of a laminate, a coil, a rotating electric machine, an insulating resin composition, an insulating paint, and an insulating film according to one aspect of the present invention will be hereinafter described in detail. As used herein, values connected with "to" refer to the numerical range including the values before and after "to" as the lower and upper limits. When a plurality of lower limits and a plurality of upper limits are mentioned separately, any lower limit and any upper limit may be selected and connected with "to".

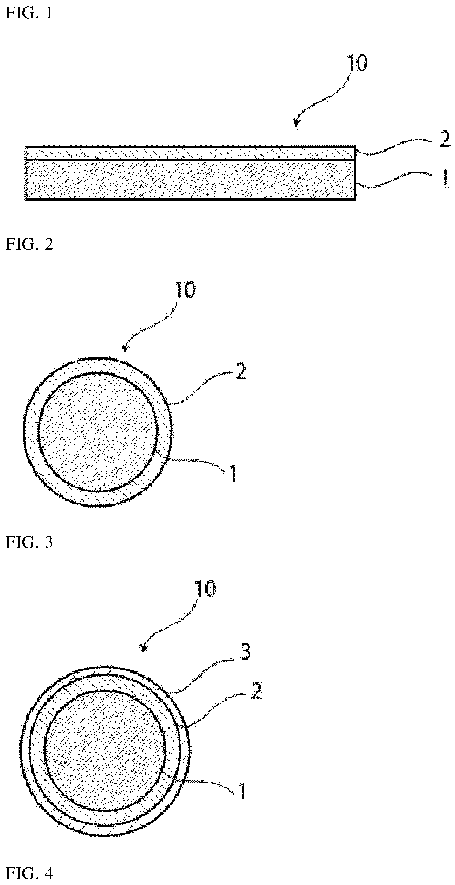

The laminate of the present invention is a laminate comprising at least a conductor and an insulating coating formed on the conductor. In the laminate according to an embodiment of the present invention, the insulating coating is composed of a nanocomposite formed of a resin composition in which a metal oxide hydrate is dispersed in a resin (that is, a composite material in which a nano-size metal oxide hydrate is dispersed in a resin), and the metal oxide hydrate has a negative zeta potential when dispersed in N-methyl-2-pyrrolidone (NMP). Because of these features, the laminate according to an embodiment of the present invention has excellent partial discharge resistance even in a high-humidity environment, as well as excellent insulating properties. The laminate according to an embodiment of the present invention will be hereinafter described in detail with reference to FIGS. 1 to 5.

In the present invention, "inverter surge" refers to an abrupt overvoltage superimposed on the drive voltage, which occurs due to switching of an inverter. The switching frequency of an inverter ranges from a relatively low frequency of about 1 kHz to a high frequency of up to 100 kHz; hence, the frequency of occurrence of inverter surges is also extremely high, from about 1 to 100 kHz. The voltage ranges from a voltage of about 1000 V that is superimposed on a drive voltage of 400 V for industrial inverter motors, to a voltage of about 3 kV that is superimposed on the drive voltage of high-voltage-driven inverter motors.

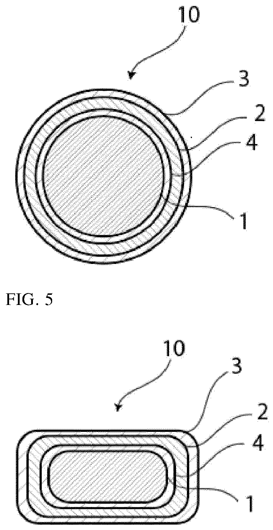

A laminate 10 according to an embodiment of the present invention has a laminated structure comprising at least a conductor 1 and an insulating coating 2, as shown in FIGS. 1 to 5. Specifically, for example, as shown in FIG. 1, the laminate 10 of the present invention may be in the form of a film having at least the conductor 1 and the insulating coating 2 laminated on the conductor 1. Alternatively, as shown in FIGS. 2 to 5, for example, the laminate 10 according to an embodiment of the present invention may be in the form of an insulated electric wire having the conductor 1 at a central region and the insulating coating 2 formed around the perimeter of the conductor 1. When the laminate 10 of the present invention is in the form of an insulated electric wire, it may have a circular shape, an oval shape, a polygonal shape (which may be a straight angle shape or an irregular shape), or the like in cross section. FIGS. 2 to 4 show insulated electric wires having a circular cross section. FIG. 5 shows an insulated electric wire having a generally rectangular cross section. When the conductor 1 has a circular shape in cross section, the conductor may have a diameter of, for example, about 0.03 to 4.0 mm.

As long as the laminated structure of the laminate 10 according to an embodiment of the present invention includes at least the conductor 1 and the insulating coating 2, the laminated structure may also include other layers. The other layers include, for example, insulating layers 3 and 4. FIG. 3, for example, shows the laminate 10 (insulated electric wire) including the conductor 1, the insulating coating 2 formed on an upper surface of the conductor 1, and an insulating layer 3 formed on an upper surface of the insulating coating 2. FIGS. 4 and 5 each show the laminate 10 (insulated electric wire) including the conductor 1, the insulating layer 4 formed on an upper surface of the conductor 1, the insulating coating 2 formed on an upper surface of the insulating layer 4, and the insulating layer 3 formed on an upper surface of the insulating coating 2. The materials constituting the insulating layers 3 and 4 may be, for example, the below-described resins having heat resistance (heat-resistant resins).

The insulating layers 3 and 4 may each be composed of the same material as the material of the insulating coating 2, or may each be composed of a different material. The insulating layers 3 and 4 may be composed of the same material or different materials. The insulating layers 3 and 4 may each be disposed under the insulating coating 2 (i.e., on the conductor 1 side), or may each be disposed over the insulating coating 2 (i.e., the side opposite to the conductor 1).

The other layers also include a plating layer of a metal different from the conductor, which is formed between the conductor surface and an insulating layer.

The material constituting the conductor 1 may be any conductive material, for example, a metal such as copper (e.g., low-oxygen copper, oxygen-free copper, or a copper alloy), aluminum, silver, nickel, or iron. The material constituting the conductor 1 may be selected appropriately according to the use of the present invention.

As described above, the insulating coating 2 is composed of a nanocomposite formed of a resin composition in which a metal oxide hydrate is dispersed in a resin. The metal oxide hydrate is preferably a hydrated alumina, such as boehmite or gibbsite, in order to satisfactorily achieve the effect of the present invention. The metal oxide hydrate contained in the insulating coating 2 is preferably boehmite. The metal oxide hydrate may be a single metal oxide hydrate or two or more metal oxide hydrates.

The metal oxide hydrate is preferably in the shape of flat fine particles having a high aspect ratio (long side (one side)/thickness), which achieves even superior partial discharge resistance. The metal oxide hydrate preferably has a plate shape, a rod shape, or a needle shape, for example. The metal oxide hydrate preferably has, for example, a substantially rectangular shape (a substantially quadrangular shape, such as a substantially square shape or substantially rectangular shape) in plan view of a main surface (usually, a surface perpendicular to a thickness direction) of the metal oxide hydrate. The aspect ratio (long side (one side)/thickness) of the metal oxide hydrate is preferably 4 or more, more preferably 10 or more, and still more preferably 15 or more, while the aspect ratio is preferably 200 or less, more preferably 100 or less, and still more preferably 50 or less. As used herein, the aspect ratio refers to the ratio when observed at a magnification of 5000x, using a scanning electron microscope.

The metal oxide hydrate is preferably in the form of particles, and the metal oxide hydrate particles preferably have an average particle diameter of preferably 100 nm or less, more preferably 80 nm or less, still more preferably 50 nm or less. The lower limit of the average particle diameter of the metal oxide hydrate particles is, for example, 5 nm or more, and preferably 10 nm or more. Preferred ranges of the average particle diameter of the metal oxide hydrate particles include from 5 to 100 nm, from 5 to 80 nm, from 5 to 50 nm, from 10 to 100 nm, from 10 to 80 nm, and from 10 to 50 nm. When the metal oxide hydrate particles are flat fine particles with a high aspect ratio (long side (one side)/thickness) as described above, the average particle diameter is defined as the average of the long side and the short side when observed with a scanning electron microscope.

In the present invention, the metal oxide hydrate has a negative zeta potential when dispersed in N-methyl-2-pyrrolidone (NMP). Because the nanocomposite containing the metal oxide hydrate having a negative zeta potential is used as the insulating coating, the laminate according to an embodiment of the present invention can exhibit excellent partial discharge resistance in a high-humidity environment, as well as excellent insulating properties. The mechanism by which these properties are exhibited can be assumed to be, for example, as follows. Usually, a resin has functional groups such as carboxyl, aldehyde, ether, ester, amino, amide, or hydroxyl groups, and, due to the formation of hydroxyl groups, amino groups, or the like derived from the polarization or local hydrolysis of these functional groups, the surface charge on the resin surface is assumed be negative. When the metal oxide hydrate of the present invention is dispersed in such a resin, it is assumed that the resin and the metal oxide hydrate repel each other. Presumably, molecular vibration of the resin chain is inhibited more by this repulsion, and as a result, these properties are exhibited.

The zeta potential of the metal oxide hydrate may be any negative value, and the absolute value of the zeta potential of the metal oxide hydrate is preferably 1 to 100 mV, more preferably 2 to 50 mV, still more preferably 3 to 30 mV, still more preferably 5 to 25 mV, and still more preferably 5 to 10 mV, in order to more satisfactorily achieve the effect of the present invention.

The zeta potential of the metal oxide hydrate is measured using the following method. First, the metal oxide hydrate in a sol state is diluted with N-methyl-2-pyrrolidone (NMP) and adjusted to a concentration of 0.1% by mass to prepare a sample. The sample is subsequently placed in a thermostatic chamber at 5°C and kept warm for 1 hour. Then, about 1 g of the sample is loaded into a zeta dip cell for measurement and subjected to measurement. Zeta Nanosizer ZS available from Malvern Ltd. is used as the measuring apparatus. The specific measurement method is as described in the Examples.

The metal oxide hydrate is preferably surface-treated, in order to more satisfactorily achieve the effect of the present invention. Examples of surface treatment methods include methods using surface treatment agents, specifically including a method of treating with a silane coupling agent (such as an epoxy-based silane coupling agent or a methacrylic-based silane coupling agent), a method of treating with a titanate coupling agent, a method of treating with an aluminate-based surface treatment agent, a method of treating with a phosphoric acid-based surface treatment agent, and a method of treating with a carboxylic anhydride such as phthalic anhydride. Of these, a metal oxide hydrate surface-treated with a silane coupling agent and a metal oxide hydrate surface-treated with a phosphoric acid-based surface treatment agent are preferred; and a metal oxide hydrate surface-treated with a phosphoric acid-based surface treatment agent is more preferred. Examples of phosphoric acid-based surface treatment agents include phosphonic acid derivative-based surface treatment agents, such as phenylphosphonic acid, octadecylphosphonic acid, 11-{2-[2-(2-methoxyethoxy)ethoxy]ethoxy}undecylphosphonic acid, 1H,1H,2H,2H-perfluoro-n-decylphosphonic acid, 1H,1H,2H,2H-perfluoro-n-hexylphosphonic acid, 11-hydroxyundecylphosphonic acid, 10-carboxydecylphosphonic acid, and 11-aminoundecylphosphonic acid. A metal oxide hydrate surface-treated with any of the phosphonic acid derivative-based surface treatment agents, among the phosphoric acid-based surface treatment agents, can have a zeta potential of a suitable negative value, which makes this metal oxide hydrate particularly suitable as the metal oxide hydrate that exhibits the effect of the present invention.

The method of the surface treatment is not specifically limited. When the metal oxide hydrate is a powder, a solution of the surface treatment agent in a solvent may be sprayed or the like on the powder and then dried at 20 to 60°C. When a metal oxide hydrate sol is used, the surface treatment agent may be added and dissolved, and then stirred at 20 to 60°C for 1 to 24 hours. When the metal oxide hydrate is treated with a surface treatment agent, the amount of the surface treatment agent to be used is preferably 5 parts by mass or more, and more preferably 10 parts by mass or more, per 100 parts by mass of the metal oxide hydrate, while the amount of the surface treatment agent is preferably 70 parts by mass or less, more preferably 60 parts by mass or less, and still more preferably 40 parts by mass or less, per 100 parts by mass of the metal oxide hydrate.

The resin contained in the resin composition (nanocomposite) constituting the insulating coating 2 is preferably a heat-resistant resin. That is, the insulating coating 2 is required to have excellent heat resistance, because it is formed by applying an insulating paint (the resin composition containing the metal oxide hydrate) used for forming the insulating coating 2, followed by baking. The heat-resistant resin may be any resin with excellent heat resistance, and may be a resin used for known insulated electric wires, for example. Examples of the heat-resistant resin include a formal resin, a polyurethane, an epoxy resin, a polyester, a polyamide, a polyester-imide, a polyetherimide, a polyamide-imide, a polyimide, and precursors thereof. Among the above, a polyester-imide, a polyamide-imide, a polyimide, and precursor thereof are preferably used, and a polyimide and a polyimide precursor are more preferably used, in order to further improve the heat resistance. The resin contained in the insulating coating 2 may be a single resin or two or more resins.

In the resin composition constituting the insulating coating 2, the lower limit of the resin content is preferably 50% by mass or more, and more preferably 60% by mass or more, while the upper limit of the resin content is preferably 97% by mass or less, more preferably 90% by mass or less, and still more preferably 85% by mass or less.

In the resin composition constituting the insulating coating 2, the lower limit of the metal oxide hydrate content is preferably 3% by mass or more, more preferably 10% by mass or more, and still more preferably 12% by mass or more, while the upper limit of the metal oxide hydrate content is preferably 50% by mass or less, and more preferably 40% by mass or less.

In the resin composition constituting the insulating coating 2, the ratio (mass ratio) of the metal oxide hydrate to the resin is such that the amount of the metal oxide hydrate is preferably 1 to 50 parts by mass, more preferably 2 to 30 parts by mass, still more preferably 3 to 25 parts by mass, and still more preferably 15 to 25 parts by mass, relative to a total of 100 parts by mass of the resin and the metal oxide hydrate.

The insulating coating 2 has a thickness of preferably 3 µm or more, more preferably 5 µm or more, still more preferably 10 µm or more, in order to more satisfactorily achieve the effect of the present invention. The upper limit of the thickness of the insulating coating 2 is preferably 200 µm or less, more preferably 100 µm or less, and still more preferably 50 µm or less.

In the preparation of the below-described insulating paint for forming the insulating coating 2, each of the resin and the metal oxide hydrate may be used in the form of a solution or dispersion in a solvent (such as a resin varnish).

In the preparation of the below-described insulating paint for forming the insulating coating 2, preferably, the insulating paint is prepared in which the resin is dissolved or dispersed and the metal oxide hydrate is dispersed in a solvent, and the insulating coating 2 is formed by applying the insulating paint, followed by baking. High-boiling-point solvents are typically suitably used as the solvent for dissolving or dispersing the resin while suitably dispersing the metal oxide hydrate, and examples of such solvents include cresol-based phenols, aromatic alcohols, NMP (N-methyl-2-pyrrolidone), DMAC (N,N-dimethylacetamide), DMF (N,N-dimethylformamide), DMI (1,3-dimethyl-2-imidazolidinone), carbonate-based solvents, lactone-based solvents, and glycol ether-based solvents. Examples of methods for preparing the insulating paint include methods using a commonly known mixing means, such as a kneader, a pressure kneader, a kneading roll, a banbury mixer, a twin-screw extruder, a planetary centrifugal mixer, or a homo-mixer. The mixing temperature during the preparation is usually 5 to 30°C.

The insulating paint may contain an acid component or an alkali component to stabilize the dispersion. The insulating paint may also contain water, a low-boiling-point alcohol, or a low-viscosity solvent or the like that contributes to reducing the viscosity of the insulating paint. Optionally, the insulating paint may be mixed with other metal oxide hydrates or metal oxides, or may contain additives to impart hydrophobicity or improve the dispersibility. Fluorine- or silicon-based additives, citric acid, ethylenediaminetetraacetic acid, and 8-quinolinol are suitably used as the additives.

As described above, the laminate 10 according to an embodiment of the present invention may consist of the conductor 1 and the insulating coating 2, or may further include other layers such as the insulating layer 3 and the insulating layer 4. Examples of other layers include an organic insulating layer. The organic insulating layer is preferably composed of the heat-resistant resin described above. That is, specific examples of the heat-resistant resin in the organic insulating layer include a formal resin, a polyurethane, an epoxy resin, a polyester, a polyamide, a polyester-imide, a polyetherimide, a polyamide-imide, a polyimide, and precursors thereof. Among the above, a polyester-imide, a polyamide-imide, a polyimide, and precursor thereof are preferably used, in order to further improve the heat resistance. The heat-resistant resin contained in the organic insulating layer may be a single heat-resistant resin or two or more heat-resistant resins. A metal layer such as a plating layer may also be formed on the conductor 1.

In the laminate 10 according to an embodiment of the present invention, the insulating layer(s) preferably have a total thickness of preferably 5 µm or more, more preferably 10 µm or more, still more preferably 20 µm or more, in order to more satisfactorily achieve the effect of the present invention. The upper limit of the thickness of the organic insulating layer is preferably 200 µm or less.

An inorganic insulating layer is formed on a portion of the insulating coating 2 when the laminate according to an embodiment of the present invention is exposed to partial discharge caused by inverter surges. Also in Patent Literature 1, a thin inorganic insulating layer with a thickness of 100 nm to 5 µm is formed by partial discharge, which contributes to achieving an extended electrical insulation lifetime. In the present invention, the inorganic insulating layer is formed even after moisture absorption in a high-humidity environment. It is believed that this contributes to achieving an extended electrical insulation lifetime even after moisture absorption. The inorganic insulating layer is formed, for example, at a frequency of 1 to 100 kHz and a voltage of 600 V to 3 kV.

The laminate 10 according to an embodiment of the present invention can be produced by laminating a layer constituting the insulating coating 2 on the conductor 1. For example, the laminate 10 can be produced by applying the resin composition for forming the insulating coating 2 on the conductor 1, followed by baking. Alternatively, an insulated electric wire can be produced by winding around the conductor 1 an insulating film formed using the resin composition for forming the insulating coating 2. The insulating film can be formed by shaping the resin composition (insulating paint) for forming the insulating coating 2 using a film coater or the like, and baking the resin composition. The difference in these methods of producing an insulated electric wire is whether the insulating coating 2 is formed on the conductor or the insulating film is formed separately and then wound on the conductor 1. The insulating film corresponds to the insulating coating 2 in the form of a film.

Examples of methods of applying the insulating paint include, but are not specifically limited to, a method in which the insulating paint is applied with a coater; a method in which the insulting paint is repeatedly applied and dried with a dip coater or a die to obtain a coating with a predetermined thickness; and spray coating. Baking may be performed by heating at a high temperature (for example, 300°C or more) for a predetermined time. The insulating coating 2 may also be formed by repeating a series of application and heating operations a plurality of times until a predetermined thickness of the insulating coating 2 is achieved. In the formation of the insulating coating 2, the baking temperature and time are adjusted according to the type of the metal oxide hydrate, such that the metal oxide hydrate is not thermally altered to another metal oxide hydrate or metal oxide.

For example, when the laminate 10 according to an embodiment of the present invention is in the form of an insulated electric wire, the insulated electric wire can be produced by applying the insulating paint onto the surface of the conductor 1 in the shape of an electric wire, followed by baking. The insulating coating 2 can be formed by repeating a plurality of times (for example, 10 to 20 times) a series of operations (application and heating) of applying the insulating paint onto the conductor 1 to a predetermined thickness, and heating at a high temperature (for example, 300 to 500°C) for a predetermined time (for example, 1 to 2 minutes), until a predetermined thickness of the insulating coating 2 is achieved.

A coil according to an embodiment of the present invention can be formed by winding the above-described insulated electric wire around a core. A rotating electric machine according to an embodiment of the present invention is a rotating electric machine in which the coil according to an embodiment of the present invention is used for a motor or the like. That is, the rotating electric machine according to an embodiment of the present invention may be produced using the insulated electric wire according to an embodiment of the present invention, or may be produced by forming a rotating electric machine using the conductor 1, and then forming the insulating coating 2 on the surface of the conductor 1 to form an insulated electric wire.

Examples of the rotating electric machine include motors and generators.

### Examples

The present invention will be described in more detail with examples; however, the present invention is in no way limited to these examples.

The resin (polyimide paint) used in the examples and comparative example is as follows.

### [Resin (Polyimide Paint)]

Pyre-M.L. RC5019 available from I.S.T Corporation was used.

### [Insulating Paint Containing Metal Oxide Hydrate]

Insulating paints of the compositions shown in Table 1 were prepared by the procedures shown in Production Examples 1 to 4 below.

### <Production Example 1>

An NMP-dispersed boehmite sol containing boehmite surface-treated with a phosphoric acid-based surface treatment agent [product name: alumina sol A2M7 (with a boehmite content of 7% by mass), average particle diameter: 15 to 50 nm, aspect ratio (long side/thickness): 10 to 50; available from Kawaken Fine Chemicals Co., Ltd.] was added to the polyimide paint so that the amount of boehmite calculated in terms of alumina was 15 parts by mass relative to 85 parts by mass of the resin component in the polyimide paint, and homogeneously dispersed by stirring at room temperature for 5 minutes using a homo-mixer, thus giving an insulating paint 1.

### <Production Example 2>

An insulating paint 2 was obtained as in Production Example 1, except that the amount of the resin component was 87 parts by mass, and the amount of boehmite calculated in terms of alumina was 13 parts by mass, in Production Example 1.

### <Production Example 3>

An insulating paint 3 was obtained as in Production Example 1, except that instead of the alumina sol A2M7, an NMP-dispersed boehmite sol containing boehmite surface-treated with a methacrylic-based silane coupling agent [product name: alumina sol 5SK-5-10 (with a boehmite content of 10% by mass), average particle diameter: 20 nm, aspect ratio (long side/thickness): 4 to 20; available from Kawaken Fine Chemicals Co., Ltd.] was used so that the amount of boehmite calculated in terms of alumina was 5 parts by mass in Production Example 1.

### <Production Example 4>

To an NMP-dispersed boehmite sol [product name: alumina sol A1-10 (with a boehmite content of 10% by mass), average particle diameter: 15 to 50 nm, aspect ratio (long side/thickness): 10 to 50; available from Kawaken Fine Chemicals Co., Ltd.], phosphoric acid ethyl ester (ethyl acid phosphate [Ethyl Phosphate (Mono- and Di- Ester mixture) available from Tokyo Chemical Industry Co., Ltd.; monoester content: 35.0 to 47.0%, diester content: 53.0 to 67.0%)] was added in an amount of 6 parts by mass relative to 100 parts by mass of boehmite (calculated in terms of alumina), and 8-quinolinol (available from Tokyo Chemical Industry Co., Ltd.) was added in an amount of 24 parts by mass relative to 100 parts by mass of boehmite (calculated in terms of alumina). The mixture was stirred at room temperature for 1 hour to give an NMP-dispersed boehmite sol containing boehmite surface-treated with phosphoric acid ethyl ester.

Subsequently, the boehmite sol containing boehmite surface-treated with phosphoric acid ethyl ester was added to the polyimide paint so that the amount of boehmite calculated in terms of alumina was 15 parts by mass relative to 85 parts by mass of the resin component in the polyimide paint, and homogeneously mixed and dispersed at room temperature using an in-line homo-mixer, thus giving an insulating paint 4.

### <Production Example 5>

An insulating paint 5 was obtained as in Production Example 4, except that 10 parts by mass of phenylphosphonic acid (available from Tokyo Chemical Industry Co., Ltd.) was used instead of 6 parts by mass of phosphoric acid ethyl ester.

### <Production Example 6>

An insulating paint 6 was obtained as in Production Example 5, except that the amount of phenylphosphonic acid was changed from 10 parts by mass to 30 parts by mass.

### <Production Example 7>

An insulating paint 7 was obtained as in Production Example 5, except that the amount of phenylphosphonic acid was changed from 10 parts by mass to 40 parts by mass.

### [Measurement of Zeta Potential of Metal Oxide Hydrate]

The zeta potential of the surface-treated boehmite used for preparing each of the insulating paints obtained in Production Examples 1 to 7 was measured by the following method. The surface-treated boehmite in the state of an NMP-dispersed sol was diluted with N-methyl-2-pyrrolidone and adjusted to a concentration of 0.1% by mass. When the boehmite was a powder, the powder was added to N-methyl-2-pyrrolidone, and the mixture was dispersed using STAR BURST, which is a wet jet mill available from Sugino Machine Limited, to form a sol, and then the sol was adjusted to a concentration 0.1% by mass. The sample was subsequently placed in a thermostatic chamber at 5°C and kept warm for 1 hour. Then, about 1 g of the sample was loaded into a zeta dip cell for measurement and subjected to measurement. Zeta Nanosizer ZS available from Malvern Ltd. was used as the measuring apparatus. The measurement conditions are shown below. Table 1 shows the zeta potential of each boehmite.
- Sample: boehmite, refractive index 1.65, absorptivity 0.008
- Dispersion medium: N-methyl-2-pyrrolidone, viscosity 1.89, refractive index 1.470, dielectric constant 32.0

- Equilibration time: 120 seconds
- F (Ka): 1.5

### [Preparation of Insulating Film]

### (Example 1)

The insulating paint 1 produced in Production Example 1 was applied to a 100 µm thick PET film with a rectangular shape, using a blade coater with a groove depth of 600 µm. The PET film kept in a horizontal position was dried in a forced air oven under temperature conditions of 70°C for 15 minutes, 90°C for 45 minutes, and 130°C for 10 minutes in this order, to form a film on the PET film. This film was peeled off from the PET film and then heat-treated at 150°C for 10 minutes, at 200°C for 10 minutes, at 250°C for 10 minutes, and at 300°C for 60 minutes in this order, to give an insulating film. The resulting insulating film had a thickness of 55 µm.

### (Example 2)

An insulating film was obtained as in Example 1, except that the insulating paint 1 was replaced by the insulating paint 2. The resulting insulating film had a thickness of 56 µm.

### (Example 3)

An insulating film was obtained as in Example 1, except that the insulating paint 1 was replaced by the insulating paint 3, and the groove depth was changed to 300 µm. The resulting insulating film had a thickness of 26 µm.

### (Comparative Example 1)

An insulating film was obtained as in Example 1, except that the insulating paint 1 was replaced by the insulating paint 4. The resulting insulating film had a thickness of 49 µm.

### [Evaluation of Properties of Insulating Film]

The insulating films obtained in the examples and comparative example were evaluated for the following properties. The results are shown in Table 2.

### (Measurement of Dielectric Breakdown Voltage after Drying and Dielectric Breakdown Voltage after Moisture Absorption)

### (Measurement of Dielectric Breakdown Voltage after Drying)

Each of the insulating films produced in Examples 1 to 3 and Comparative Example 1 was cut into an 18 × 26 cm rectangular shape, and dried in a thermostatic chamber at 120°C for 60 minutes. The insulating film was then placed in a dielectric breakdown voltage measuring apparatus, and voltage was applied to measure the dielectric breakdown voltage. A breakdown and withstand voltage testing machine (No. 175, available from Yasuda Seiki Seisakusho, Ltd.) was used as the measuring apparatus. An increasing voltage was applied at 0.5 V/s, and the voltage at which breakdown occurred was determined as the dielectric breakdown voltage. This test was conducted five times, and the average value of the five measurements was used as the test result.

### (Evaluation of Dielectric Breakdown Voltage after Moisture Absorption)

Each of the insulating films produced in Examples 1 to 3 and Comparative Example 1 was cut into an 18 × 26 cm rectangular shape, and stored in a thermostatic chamber at 30°C and relative humidity >95% for 3 days to absorb moisture. Then, the sample after moisture absorption was removed and placed in a dielectric breakdown voltage measuring apparatus, and voltage was applied to measure the dielectric breakdown voltage. A breakdown and withstand voltage testing machine (No. 175, available from Yasuda Seiki Seisakusho, Ltd.) was used as the measuring apparatus. An increasing voltage was applied at 0.5 V/s, and the voltage at which breakdown occurred was determined as the dielectric breakdown voltage. This test was conducted five times, and the average value of the five measurements was used as the test result. It should be noted that the measurement was started within 3 minutes after the removal of the sample from the thermostatic chamber to the measurement, so as to prevent the sample from drying.

### [Production of Insulated Electric Wire]

Insulated electric wires (laminates) were produced by the procedures shown in Examples 4 to 8 and Comparative Example 2 below. Table 3 shows the insulating coating used (paint used) for each of the insulated electric wires.

### (Example 4)

The insulating paint 1 applied on a copper conductor (a copper wire with a diameter of about 1 mm (the conductor diameter is shown in Table 3)) was baked for about 1 minute while continuously increasing the temperature from an inlet temperature of 350°C to an outlet temperature of 430°C. This process was repeated 20 times to form an insulating layer with a thickness of 40 µm on the surface of the copper conductor. As a result, an insulated electric wire was produced using the insulating paint 1 containing boehmite. The thickness of the insulating layer was 40 µm.

### (Example 5)

An insulated electric wire was produced as in Example 4, except that the insulating paint 1 was replaced by the insulating paint 2. The thickness of the insulating layer was 39 µm.

### (Example 6)

An insulated electric wire was produced as in Example 4, except that the insulating paint 1 was replaced by the insulating paint 5. The thickness of the insulating layer was 37 µm.

### (Example 7)

An insulated electric wire was produced as in Example 4, except that the insulating paint 1 was replaced by the insulating paint 6. The thickness of the insulating layer was 37 µm.

### (Example 8)

An insulated electric wire was produced as in Example 4, except that the insulating paint 1 was replaced by the insulating paint 7. The thickness of the insulating layer was 38 µm.

### (Comparative Example 2)

An insulated electric wire was produced as in Example 4, except that the insulating paint 1 was replaced by the insulating paint 4. The thickness of the insulating layer was 38 µm.

### [Evaluation of Properties of Insulated Electric Wires]

The insulated electric wires obtained in the examples and comparative example were evaluated for the following properties. The results are shown in Table 3.

### <Evaluation of Flexibility>

The flexibility of the insulated electric wires was tested in accordance with the winding test as defined in JIS C3216-5-1.

### <Measurement in V-t Characteristic Test>

The insulated electric wires produced were subjected to a V-t characteristic test by the following method. The measurement results are shown in Table 3.

### (Dry V-t Characteristic Test)

Each insulated electric wire was used to produce a twisted pair sample in accordance with JIS C 3216, and voltage was applied across the two wires. The measurement environment was such that the temperature was controlled to 40°C, and the relative humidity was controlled to 30% or less by introducing dry air into a thermostatic chamber for sample measurement. The inverter pulse generator PG-WO3KP-A available from Nissin Pulse Electronics Co., Ltd. was used for the measurement, and the time to dielectric breakdown of the twisted pair sample was measured under the following conditions.

Measurement conditions: a bipolar square wave with a voltage of 2.5 kVp, a pulse width of 5 µs, and a frequency of 10 kHz

### (High Humidity (50% RH) V-t Characteristic Test)

Each insulated electric wire was used to produce a twisted pair sample in accordance with JIS C 3216, and voltage was applied across the two wires. The measurement environment was such that the temperature was controlled to 25°C, and the relative humidity in the chamber was constantly controlled to 50% by introducing air controlled to a relative humidity of 50% into the chamber for sample measurement. The inverter pulse generator PG-WO3KP-A available from Nissin Pulse Electronics Co., Ltd. was used for the measurement, and the time to dielectric breakdown of the twisted pair sample was measured under the following conditions.

Measurement conditions: a bipolar square wave with a voltage of 2.5 kVp, a pulse width of 5 µs, and a frequency of 10 kHz

### (High Humidity (70% RH) V-t Characteristic Test)

Each insulated electric wire was used to produce a twisted pair sample in accordance with JIS C 3216, and voltage was applied across the two wires. The measurement environment was such that the temperature was controlled to 25°C, and the relative humidity in the chamber was constantly controlled to 70% by introducing air controlled to a relative humidity of 70% into the chamber for sample measurement. The inverter pulse generator PG-WO3KP-A available from Nissin Pulse Electronics Co., Ltd. was used for the measurement, and the time to dielectric breakdown of the twisted pair sample was measured under the following conditions.

Measurement conditions: a bipolar square wave with a voltage of 2.5 kVp, a pulse width of 5 µs, and a frequency of 10 kHz

### (High-Temperature V-t Characteristic Test)

Each insulated electric wire was used to produce a twisted pair sample in accordance with JIS C 3216, and voltage was applied across the two wires. Measurement was conducted in a measurement environment at a controlled temperature of 240°C. The inverter pulse generator PG-WO3KP-A available from Nissin Pulse Electronics Co., Ltd. was used for the measurement, and the time to dielectric breakdown of the twisted pair sample was measured under the following conditions.

Measurement conditions: a bipolar square wave with a voltage of 1.5 kVp, a pulse width of 5 µs, and a frequency of 10 kHz

### (Measurement of Dielectric Breakdown Voltage after Drying and Measurement of Dielectric Breakdown Voltage after Moisture Absorption)

The insulated electric wires produced were measured for dielectric breakdown voltage after drying and dielectric breakdown voltage after moisture absorption, by the following methods. The measurement results are shown in Table 3.

### (Measurement of Dielectric Breakdown Voltage after Drying)

Each insulated electric wire was used to produce a twisted pair sample in accordance with JIS C 3216, and the sample was dried in a thermostatic chamber at 125°C for 30 minutes. Then, the two wires of the twisted pair were connected to a measuring apparatus, and voltage was applied across the two wires to measure the dielectric breakdown voltage. A breakdown and withstand voltage testing machine (No. 175, available from Yasuda Seiki Seisakusho, Ltd.) was used as the measuring apparatus. An increasing voltage was applied at 0.5 v/s across the two wires, and the voltage at which breakdown occurred was determined as the dielectric breakdown voltage. This test was conducted five times, and the average value of the five measurements was used as the test result.

### (Evaluation of Dielectric Breakdown Voltage after Moisture Absorption)

Each insulated electric wire was used to produce a twisted pair sample in accordance with JIS C 3216, and the sample was stored in a thermostatic chamber at 40°C and a relative humidity of 95% for 3 days to absorb moisture. Then, the sample after moisture absorption was removed, the two wires of the twisted pair were connected to a measuring apparatus, and voltage was applied across the two wires to measure the dielectric breakdown voltage. A breakdown and withstand voltage testing machine (No. 175, available from Yasuda Seiki Seisakusho, Ltd.) was used as the measuring apparatus. An increasing voltage was applied at 0.5 V/s across the two wires, and the voltage at which breakdown occurred was determined as the dielectric breakdown voltage. It should be noted that the measurement was started within 3 minutes after the removal of the sample from the thermostatic chamber to the measurement, so as to prevent the sample from drying. This test was conducted five times, and the average value of the five measurements was used as the test result.

**[Table 1]**

| | | Metal Oxide Hydrate | Zeta Potential (mV) | Part(s) by Mass | |
|---|---|---|---|---|---|
| | | | | Polyimide Resin | I Boehmite |
| Production Example 1 | Insulating Paint 1 | Boehmite Surface-Treated with Phosphoric Acid-Based Surface Treatment Agent | -23.0 | 85 | 15 |
| Production Example 2 | Insulating Paint 2 | | | 87 | 13 |
| Production Example 3 | Insulating Paint 3 | Boehmite Surface-Treated with Methacrylic-Based Silane Coupling Agent | -2.12 | 95 | 5 |
| Production Example 4 | Insulating Paint 4 | Boehmite Surface-Treated with Phosphoric Acid Ethyl Ester | +5.4 | 85 | 15 |
| Production Example 5 | Insulating Paint 5 | Boehmite Surface-Treated with Phenylphosphonic Acid | -5.6 | 85 | 15 |
| Production Example 6 | Insulating Paint 6 | Boehmite Surface-Treated with Phenylphosphonic Acid | -6.3 | 85 | 15 |
| Production Example 7 | Insulating Paint 7 | Boehmite Surface-Treated with Phenylphosphonic Acid | -7.3 | 85 | 15 |

**[Table 2]**

| | Paint Used | Insulating Film | | | |
|---|---|---|---|---|---|
| | | Size | Dielectric Breakdown Voltage (kVp) | | |
| | | Thickness (mm) | After Drying | After Moisture Absorption | After Moisture Absorption/after Drying (%) |
| Example 1 | Insulating Paint 1 | 0.055 | 8.0 | 6.2 | 77.5 |
| Example 2 | Insulating Paint 2 | 0.056 | 8.6 | 6.5 | 75.6 |
| Example 3 | Insulating Paint 3 | 0.026 | 6.2 | 5.3 | 85.5 |
| Comparative Example 1 | Insulating Paint 4 | 0.049 | 7.8 | 3.9 | 50.0 |

**[Tabelle 3]**

| | Paint Used | Insulated Electric Wire (Size) | | | Flexibility Evaluation | | | V-t Characteristic | | | | Dielectric Breakdown Voltage (kVp) | | |
|---|---|---|---|---|---|---|---|---|---|---|---|---|---|---|
| | | | | | | | | Dry V-t (h) | Humidity V-t (h) | Humidity V-t (h) | High Temperature V-t (h) | | | |
| | | Conductor Diameter | Coating Thickness | Outer Diameter | Acceptable Winding Diameter | | | 40°C, <30%RH | 25°C, 50%RH | 25°C, 70%RH | 240°C | After Drying | After Moisture Absorption | After Moisture Absorption/after Drying (%) |
| | | (mm) | (mm) | (mm) | Non-Stretched | 20% Streched | 30% Stretched | | | | | | | |
| Example 4 | Insulating Paint 1 | 1.001 | 0.040 | 1.080 | 1d | 1d | 1d | > 181 | 304 | 407 | >500 | 14.0 | 10.4 | 74.3 |
| Example 5 | Insulating Paint 2 | 0.996 | 0.039 | 1.073 | 1d | 1d | 1d | 42 | - | 36 | >200 | 17.2 | 11.6 | 67.4 |
| Example 6 | Insulating Paint 5 | 0.999 | 0.037 | 1.074 | 1d | 2d | 2d | 40 | - | 221 | - | 14.3 | 11.3 | 79.0 |
| Example 7 | Insulating Paint 6 | 0.999 | 0.037 | 10.74 | 1d | 1d | 1d | > 205 | - | 117 | 100 | 14.4 | 12.6 | 87.5 |
| Example 8 | Insulating Paint 7 | 0.999 | 0.038 | 1.074 | 1d | 1d | 1d | > 170 | - | 149 | > 100 | 14.6 | 13 | 89.0 |
| Comparative Example 2 | Insulating Paint 4 | 1.000 | 0.038 | 1.076 | 1d | 2d | 3d | 32 | 37 | 9 | 78 | 15.9 | 7.5 | 47.2 |

### Reference Signs List

10: Laminate
1: Conductor
2: Insulating coating
3: Insulating layer
4: Insulating layer

## Claims

1. A laminate comprising at least a conductor and an insulating coating,
wherein the insulating coating is composed of a nanocomposite formed of a resin composition in which a metal oxide hydrate is dispersed in a resin, and
wherein the metal oxide hydrate has a negative zeta potential when dispersed in N-methyl-2-pyrrolidone (NMP).

2. The laminate according to claim 1, wherein the metal oxide hydrate comprises a hydrated alumina.

3. The laminate according to claim 1 or 2, wherein the nanocomposite contains the metal oxide hydrate dispersed in a sol state.

4. The laminate according to claim 1 or 2, wherein the resin contained in the nanocomposite is at least one selected from the group consisting of a formal resin, a polyurethane, an epoxy resin, a polyester, a polyester-imide, a polyetherimide, a polyamide-imide, a polyimide, and precursors thereof.

5. The laminate according to claim 1 or 2, wherein the resin contained in the nanocomposite is at least one selected from the group consisting of a polyimide and a polyimide precursor.

6. The laminate according to claim 1 or 2, wherein the laminate is in the form of an insulated electric wire.

7. A coil comprising the laminate according to claim 6.

8. A rotating electric machine comprising the laminate according to claim 6.

9. An insulating resin composition for forming the insulating coating of the laminate according to claim 1 or 2.

10. An insulating paint for forming the insulating coating of the laminate according to claim 1 or 2.

11. An insulating film formed using the nanocomposite according to claim 1 or 2.
